# EUROPÄISCHE PATENTSCHRIFT

(11) **EP 0 936 515 B1**
(45) Veröffentlichungstag und Bekanntmachung des Hinweises auf die Patenterteilung: **07.05.2003**
(21) Anmeldenummer: 98102680.0
(22) Anmeldetag: 17.02.1998
(51) Int. Cl.: G05B 19/00, G05B 19/042, F23N 5/24

(54) **Mehrprozessor-Steuervorrichtung**
Multiple processor control device
Dispositif de commande à multiple processeurs

(43) Veröffentlichungstag der Anmeldung: 18.08.1999
(73) Patentinhaber: ROBERT BOSCH GMBH, 70442 Stuttgart (DE)
(72) Erfinder: Koenig, Markus, 78033 Goeppingen (DE); Schmidt, Juergen, 73614 Schorndorf (DE)

(56) Entgegenhaltungen:
- EP-B- 0 352 759
- EP-B- 0 444 535
- EP-B- 0 734 549
- DE-A- 3 923 773
- DE-A- 4 221 815

## Beschreibung

### Stand der Technik

Die Erfindung geht aus von einer Vorrichtung zum Steuern eines Heizgeräts nach der Gattung des unabhängigen Anspruchs. Es ist aus der WO 95/16943 bereits ein Verfahren zum Überwachen wenigstens einer sicherheitsrelevanten Funktion eines Geräts, das zwei Mikroprozessoren enthält, bekannt. Hierbei ist vorgesehen, daß bei jeder erneuten Inbetriebnahme des Geräts dem jeweils anderen Mikroprozessor eine Masterfunktion zugeordnet wird. Nur dieser Master löst einen für die Inbetriebnahme des Geräts erforderlichen Vorgang, beispielsweise eine Zündung, aus. Der jeweils andere Mikroprozessor überprüft den Vorgang zusätzlich. Hierbei werden lediglich aktuelle Betriebszustände in Überwachung genommen.

### Vorteile der Erfindung

Die erfindungsgemäße Vorrichtung zum Steuern eines Geräts sieht einen ersten Mikroprozessor vor, der einen ersten Speicher aufweist, in dem eine erste Kennung hinterlegt ist. Der erste Mikroprozessor gibt in einem Normalbetrieb erste Signale und in einem Sicherheitsbetrieb zweite Signale an ein Gerät ab. Er tauscht mit einem zweiten Mikroprozessor Daten aus, wobei der zweite Mikroprozessor einen zweiten Speicher aufweist, in dem eine zweite Kennung hinterlegt ist. Der Normalbetrieb ist nur dann zugelassen, wenn die erste Kennung mit der zweiten Kennung übereinstimmt. Hierdurch wird eine weitere Möglichkeit geschaffen, fehlerträchtige Konfigurationen des Gesamtsystems zu erkennen und geeignete Sicherheitsmaßnahmen einzuleiten. Der Normalbetrieb stellt sich nur dann ein, wenn die Kennungen der beiden Mikroprozessoren aufeinander abgestimmt sind. Die Mikroprozessoren müssen in diesem Sinne vorbereitet und konfiguriert sein.

In einer zweckmäßigen Weiterbildung ist vorgesehen, daß in dem ersten Mikroprozessor ein Vergleicher angeordnet ist, der die erste Kennung mit der zweiten Kennung vergleicht. Der bei Übereinstimmung der beiden Kennungen zum Normalbetriebszustand führende Vergleich wird von dem als Master fungierenden ersten Mikroprozessor übernommen, der für den Datenaustausch mit dem Gerät zuständig ist. Damit läßt sich ein konsistenter Vergleich auch bei einer Vielzahl von Mikroprozessoren realisieren.

In einer vorteilhaften Weiterbildung überträgt der erste Mikroprozessor die erste Kennung nur im Normalbetrieb an das Gerät und/oder ein weiteres externes Gerät. Nur die Kennung wird ausgelesen, die in allen Mikroprozessoren in gleicher Weise hinterlegt ist. Andernfalls erkennt der Benutzer eine inkonsistente Konfiguration der Mikroprozessoren.

In einer weitergehenden Maßnahme sind weitere Mikroprozessoren vorgesehen, in deren Speicher jeweils weitere Kennungen hinterlegt sind. Der Normalbetrieb wird nur dann zugelassen, wenn jede der weiteren Kennungen mit der ersten, im ersten Mikroprozessor hinterlegten Kennung übereinstimmt. Das Sicherheitskonzept läßt sich für beliebig viele Mikroprozessoren realisieren. Nachträgliche Erweiterungen sind leicht in das Gesamtsystem zu integrieren.

In einer zweckmäßigen Weiterbildung geben die jeweiligen Kennungen Aufschluß über die in den jeweiligen Mikroprozessoren hinterlegten Programmversionen. Anhand übereinstimmender Kennungen wird auf übereinstimmende Softwareversionen in den jeweiligen Mikroprozessoren geschlossen. Mögliche Softwareunverträglichkeiten werden dadurch erkannt.

Bei einer weiteren Ausgestaltung ist vorgesehen, mit einer Initialisierung des Geräts die erste Kennung und die zweite Kennung mehrmals miteinander zu vergleichen. Hierdurch reduziert sich die Fehlerwahrscheinlichkeit, daß erste und zweite Kennung aufgrund mangelhafter Datenübertragung nicht als übereinstimmend erkannt werden. Gegebenenfalls läßt sich die Initialisierung solange wiederholen, bis erste und zweite Kennung übereinstimmen. Eine Sicherheitsabschaltung im Sicherheitsbetrieb des Geräts erfolgt nicht vorschnell.

Weitere vorteilhafte Weiterbildungen und Ausgestaltungen der erfindungsgemäßen Vorrichtung ergeben sich aus weiteren abhängigen Ansprüchen in Verbindung mit der folgenden Beschreibung.

### Zeichnung

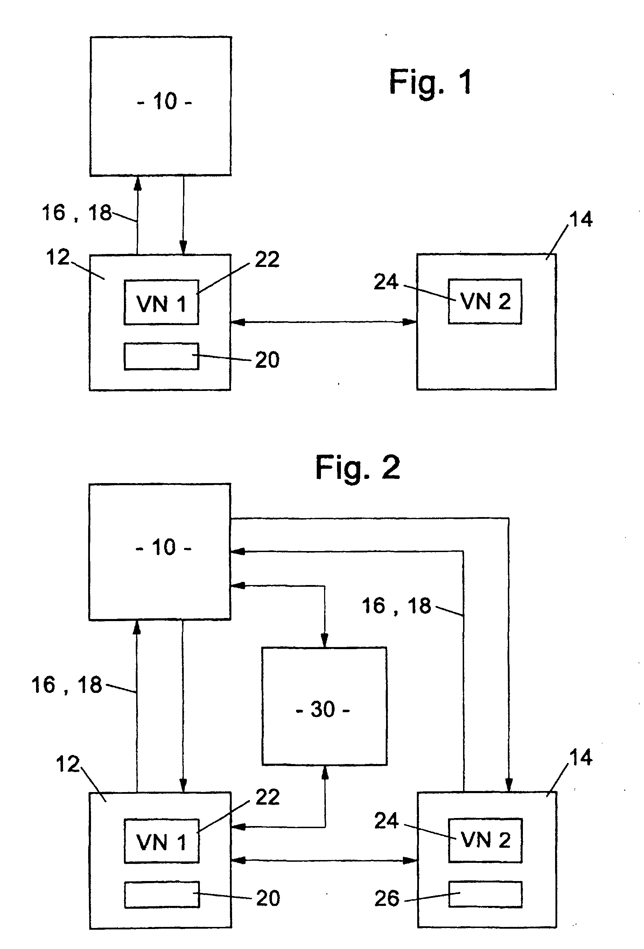

Es zeigt die Figuren 1 und 2 Blockschaltbilder zweier Ausführungsbeispiele der erfindungsgemäßen Vorrichtung.

Gemäß dem Ausführungsbeispiel nach Figur 1 enthält ein erster Mikroprozessor 12 einen ersten Speicher 22, in dem eine erste Kennung VN1 hinterlegt ist, sowie einen Vergleicher 20. Ein zweiter Mikroprozessor 14 weist einen zweiten Speicher 24 auf, in dem eine zweite Kennung VN2 abgespeichert ist. Erster und zweiter Mikroprozessor 12, 14 tauschen Daten aus. Der erste Mikroprozessor 12 gibt ein erstes Signal 16 oder ein zweites Signal 18 an ein Heizgerät 10 ab. Ein Datenaustausch ist auch in der anderen Richtung möglich.

Die Anordnung nach Figur 2 ergänzt die nach Figur 1, indem ein Steuerprozessor 30 Daten sowohl mit dem ersten Mikroprozessor 12 als auch mit dem Heizgerät 10 austauscht. Der zweite Mikroprozessor 14 gibt Signale 16, 18 an das Heizgerät 10 ab und empfängt im Gegenzug die des Heizgeräts 10. Er enthält einen zweiten Vergleicher 26.

Unter Mikroprozessor 12, 14 wird eine signalverarbeitende Anordnung verstanden, die in Abhängigkeit von Bediensignalen oder Betriebsparametern, beispielsweise eines Heizgeräts 10, Signale 16, 18 für das Heizgerät 10 generiert. Während des Normalbetriebs des Heizgeräts 10 steuert der erste Mikroprozessor 12 mit dem ersten Signal 16 beispielsweise Magnetventile so an, daß sich die vom Benutzer gewünschte Heizleistung einstellt.

Dieses erste Signal 16 stellt gemäß dem zweiten Ausführungsbeispiel auch der zweite Mikroprozessor 14 bereit. Damit steuern beide Mikroprozessoren 12, 14 die Stellglieder des Heizgeräts 10 gemeinsam an.

Der erste Mikroprozessor 12 gibt das mit dem Normalbetriebszustand korrespondierende erste Signal 16 nur dann ab, wenn die beiden Kennungen VN1, VN2 übereinstimmen. Eine entsprechende Überprüfungsroutine wird beispielsweise während des Initialisierungs- oder Startvorgangs des Heizgeräts 10 automatisch aufgerufen. Der erste Mikroprozessor 12 sendet an den zweiten Mikroprozessor 14 einen Befehl, die zweite Kennung VN2, die der zweite Speicher 24 beinhaltet, auszulesen und an den ersten Mikroprozessor 12 zurückzusenden. Der Vergleicher 20 vergleicht die vom zweiten Mikroprozessor 14 gesendete zweite Kennung VN2 mit der im ersten Speicher 22 hinterlegten ersten Kennung VN1. Stimmen sie überein, wird der Normalbetrieb zugelassen. Das erste Signal 16 wird im Normalbetrieb erzeugt und an das Heizgerät 10 gesendet.

Im zweiten Ausführungsbeispiel sendet der erste Mikroprozessor 12 seine erste Kennung VN1 an den zweiten Mikroprozessor 14, welcher umgekehrt seine zweite Kennung VN2 an den ersten Mikroprozessor 12 sendet. Beide Mikroprozessoren 12, 14 vergleichen beide Kennungen VN1, VN2 in ihren Vergleichern 20, 26. Lassen beide Vergleiche auf ein Übereinstimmen der beiden Kennnungen VN1, VN2 schließen, wird der Normalbetrieb zugelassen.

Stellt bei beiden Ausführungsbeispielen einer der Vergleicher 20, 26 ein Abweichen der beiden Kennungen VN1, VN2 fest, wird das Heizgerät 10 im Sicherheitsbetrieb mit dem zweiten Signal 18 beaufschlagt. Die im Sicherheitsbetrieb vorgenommene Sicherheitsabschaltung bewirkt beispielsweise ein Ansteuern aller Ventile in der Weise, daß eine Brennstoffzufuhr zum Brenner des Heizgeräts 10 unterbunden wird. Die Endstufen steuern die Magnetventile entsprechend an. Diesbezügliche Befehle können im ersten oder zweiten Mikroprozessor 12, 14 hinterlegt sein. Je nach Ausführungsbeispiel wird das mit dem Sicherheitsbetrieb korrespondierende zweite Signal 18 nur vom ersten Mikroprozessor 12 oder von beiden Mikroprozessoren 12, 14 an das Heizgerät 10 übertragen.

Die Kennungen VN1, VN2 geben Auskunft über die jeweilige Softwareversion, mit der die Mikroprozessoren 12, 14 betrieben werden. Unterschiedliche Kennungen VN1, VN2 lassen auf unterschiedliche Softwareversionen schließen. Wünschenswert jedoch ist ein für alle Mikroprozessoren 12, 14 gleicher Softwarestand. Hierdurch können Programmunverträglichkeiten unterschiedlicher Versionen durch gezieltes Nachrüsten der jeweils aktuellen Programmversion vermieden werden.

Aus Plausibilitätsgründen werden die beschriebenen Vergleichsvorgänge in einer vorgebbaren Anzahl wiederholt. Wenn jedesmal die beiden Kennungen VN1, VN2 übereinstimmen, ist der Normalbetrieb zugelassen. Bei einer Abweichung kann neben einer Ansteuerung des Heizgeräts 10 im Sinne einer Sicherheitsabschaltung auch vorgesehen sein, die beschriebenen Vergleichsroutinen zu wiederholen. Bei Übereinstimmung wird die Sicherheitsstellung wieder aufgehoben.

Der erste Mikroprozessor 12 kommuniziert beim zweiten Ausführungsbeispiel regelmäßig in allen Betriebszuständen mit dem Steuerprozessor 30. Der Steuerprozessor 30 ist in der Lage, mit externen Geräten Daten auszutauschen. Das externe Gerät veranlaßt den Steuerprozessor 30, vom ersten Mikroprozessor 12 dessen erste Kennung VN1 anzufordern. Der Steuerprozessor 30 gibt diese an das externe Gerät weiter. Dieser Vorgang ist nur möglich, wenn die beiden Kennungen VN1, VN2 übereinstimmen, das heißt im Normalbetrieb.

Die Überprüfung der Kennungen VN1, VN2 ist nicht auf ein System beschränkt, das lediglich aus zwei Mikroprozessoren 12, 14 besteht. Weitere Mikroprozessoren müssen weitere Speicher aufweisen, in denen jeweils entsprechende Kennungen hinterlegt sind. Sie sind in der Lage, zumindest mit dem ersten Mikroprozessor 12 Daten auszutauschen. Nur wenn alle Kennungen der verschiedenen Mikroprozessoren übereinstimmen, wird ein mit dem Normalbetrieb korrespondierendes erstes Signal 16 erzeugt.

Die beschriebene Vorrichtung ist nicht auf die Steuerung eines Heizgeräts beschränkt. Sie findet auch bei Mehrprozessorsystemen in Kraftfahrzeugen Anwendung zur gezielten Überwachung sicherheitsrelevanter Funktionen.

## Patentansprüche

1. Vorrichtung zum Steuern eines Geräts (10), mit einem ersten Mikroprozessor (12), der einen ersten Speicher (22) aufweist, in dem eine erste Kennung (VN1) hinterlegt ist, der in einem Normalbetrieb erste Signale (16) und in einem Sicherheitsbetrieb zweite Signale (18) an ein Gerät (10) abgibt und der mit zumindest einem zweiten Mikroprozessor (14) Daten austauscht, wobei der zweite Mikroprozessor (14) einen zweiten Speicher (24) aufweist, in dem eine zweite Kennung (VN2) hinterlegt ist, und der Normalbetrieb nur dann zugelassen ist, wenn die erste Kennung (VN1) mit der zweiten Kennung (VN2) übereinstimmt.

2. Vorrichtung nach Anspruch 1, **dadurch gekennzeichnet, daß** in dem ersten Mikroprozessor (12) ein Vergleicher (20) angeordnet ist, der die erste Kennung (VN1) mit der zweiten Kennung (VN2) vergleicht.

3. Vorrichtung nach einem der vorhergehenden Ansprüche, **dadurch gekennzeichnet, daß** in dem zweiten Mikroprozessor (14) ein zweiter Vergleicher (26) angeordnet ist, der die erste Kennung (VN1) mit der zweiten Kennung (VN2) vergleicht.

4. Vorrichtung nach einem der vorhergehenden Ansprüche, **dadurch gekennzeichnet, daß** der erste Mikroprozessor (12) die erste Kennung (VN1) nur im Normalbetrieb an das Gerät (10) und/oder ein externes Gerät (30) überträgt.

5. Vorrichtung nach einem der vorhergehenden Ansprüche, **dadurch gekennzeichnet, daß** weitere Mikroprozessoren vorgesehen sind, die zumindest mit dem ersten Mikroprozessor (12) Daten austauschen, wobei diese weiteren Mikroprozessoren zumindest jeweils einen Speicher aufweisen, in denen weitere Kennungen hinterlegt sind, und der Normalbetrieb nur dann zugelassen ist, wenn jede der weiteren Kennungen mit der ersten Kennung (VN1) übereinstimmt.

6. Vorrichtung nach einem der vorhergehenden Ansprüche, **dadurch gekennzeichnet, daß** die jeweiligen Kennungen (VN1, VN2) Aufschluß über die in den jeweiligen Mikroprozessoren (12, 14) hinterlegten Programmversionen geben.

7. Vorrichtung nach einem der vorhergehenden Ansprüche, **dadurch gekennzeichnet, daß** mit einer Initialisierung des Geräts (10) die erste Kennung (VN1) und die zweite Kennung (VN2) mehrmals verglichen sind.

8. Verwendung der Vorrichtung nach einem der vorhergehenden Ansprüche in einem Gerät, das als Steuerung in einem Kraftfahrzeug eingesetzt ist.

## Claims

1. Device for controlling an apparatus (10), having a first microprocessor (12) which has a first memory (22) in which a first identifier (VN1) is stored, which outputs first signals (16) to an apparatus (10) in a normal operating mode, and outputs second signals (18) to an apparatus (10) in a safety operating mode, and which exchanges data with at least one second microprocessor (14), the second microprocessor (14) having a second memory (24) in which a second identifier (VN2) is stored, and the normal operating mode is permitted only if the first identifier (VN1) corresponds to the second identifier (VN2).

2. Device according to Claim 1, **characterized in that** a comparator (20) which compares the first identifier (VN1) with the second identifier (VN2) is arranged in the first microprocessor (12).

3. Device according to one of the preceding claims, **characterized in that** a second comparator (26) which compares the first identifier (VN1) with the second identifier (VN2) is arranged in the second microprocessor (14).

4. Device according to one of the preceding claims, **characterized in that** the first microprocessor (12) transmits the first identifier (VN1) to the apparatus (10) and/or an external apparatus (30) only in the normal operating mode.

5. Device according to one of the preceding claims, **characterized in that** further microprocessors are provided which exchange data with at least the first microprocessor (12), these further microprocessors each having at least one memory in which further identifiers are stored, and the normal operating mode being permitted only if each of the further identifiers corresponds to the first identifier (VN1).

6. Device according to one of the preceding claims, **characterized in that** the respective identifiers (VN1, VN2) indicate the program versions stored in the respective microprocessors (12, 14).

7. Device according to one of the preceding claims, **characterized in that** the first identifier (VN1) and the second identifier (VN2) are compared repeatedly with an initialization of the apparatus (10).

8. Use of the device according to one of the preceding claims in an apparatus which is used as a controller in a motor vehicle.

## Revendications

1. Un dispositif de commande d'un appareil (10) comportant un premier microprocesseur (12) muni d'une première mémoire (22) contenant une première référence (VN1) et qui, en mode de fonctionnement normal, émet des premiers signaux (16) et en mode de fonctionnement de sécurité émet des seconds signaux (18) vers un appareil (10) et échange des données avec au moins un second microprocesseur (14), le second microprocesseur (14) ayant une seconde mémoire (24) contenant une seconde référence (VN2) et le mode de fonctionnement normal n'est autorisé que si la première référence (VN1) coïncide avec la seconde référence (VN2).

2. Dispositif selon la revendication 1,
**caractérisé par**
un comparateur (20) installé dans le premier microprocesseur (12) et qui compare la première référence (VN1) à la seconde référence (VN2).

3. Dispositif selon l'une des revendications précédentes,
**caractérisé en ce que**
le second microprocesseur (14) comporte un second comparateur (26) qui compare la première référence (VN1) à la seconde référence (VN2).

4. Dispositif selon l'une des revendications précédentes,
**caractérisé en ce que**
le premier microprocesseur (12) transmet la première référence (VN1) seulement en mode de fonctionnement normal vers l'appareil de commande (10) et/ou à un appareil externe (30).

5. Dispositif selon l'une des revendications précédentes,
**caractérisé par**
d'autres microprocesseurs qui échangent des données au moins avec le premier microprocesseur (12), ces autres microprocesseurs ayant au moins chaque fois une mémoire contenant une autre référence et le mode de fonctionnement normal n'est autorisé que si chacune des autres références correspond à la première référence (VN1).

6. Dispositif selon l'une des revendications précédentes,
**caractérisé en ce que**
les références respectives (VN1, VN2) donnent des informations concernant les versions de programmes contenues dans les différents microprocesseurs (12, 14).

7. Dispositif selon l'une des revendications précédentes,
**caractérisé en ce qu'**
une initialisation de l'appareil (10) permet de comparer plusieurs fois la première référence (VN1) et la seconde référence (VN2).

8. Application du dispositif selon l'une des revendications précédentes d'un appareil utilisé comme moyen de commande d'un véhicule.
